# EUROPEAN PATENT SPECIFICATION

(11) **EP 2 832 594 B1**
(45) Date of publication and mention of the grant of the patent: **28.10.2020**
(21) Application number: 14002626.1
(22) Date of filing: 29.07.2014
(51) Int. Cl.: B60S 3/04

(54) **Spraying device for wheel washing machines**
Sprühvorrichtung für Radwaschmaschinen
Dispositif de pulvérisation pour machines à laver de roues

(30) Priority: 30.07.2013 IT MO20130218
(43) Date of publication of application: 04.02.2015
(73) Proprietor: NEXION S.p.A., 42015 Correggio (RE) (IT)
(72) Inventor: Barbetti, Mauro, 42015 Correggio (IT); Barbetti, Michele, 42015 Correggio (IT); Pellacani, Gianfranco, 42015 Correggio (IT); Iotti, Roberto, 42015 Correggio (IT)
(74) Representative: Conti, Marco

(56) References cited:
- EP-A1- 0 338 509
- EP-A1- 2 527 215
- US-A- 4 123 006
- US-A- 6 085 988
- US-A1- 2004 089 748

## Description

### Field of the Invention.

The invention relates to a spraying device for wheel washing machine, which are generally designed for automatically washing vehicle wheels.

### Background art

Prior art wheel washing machines, particularly for use with vehicle wheels, briefly referred to hereinafter as "wheel washers", are typically composed of a watertight base reservoir containing a washing liquid, with a casing mounted thereto, which is also watertight, and has a substantially prismatic, typically parallelepipedal shape with a washing chamber defined therein.

The casing has a front face with an opening equipped with sealable door through which the wheels to be washed may be introduced and the washed and possibly dried wheels may be extracted.

Furthermore, passages are provided at the junction between the casing and the base reservoir, through which the washing liquid drops into the reservoir after being sprayed on a wheel.

Two transverse parallel rollers are arranged in the washing chamber, namely in a lower portion thereof, one of which is rotatably driven by a dedicated motor unit mounted to the wheel washing machine external to the casing and the other is idle.

The two rollers are placed at a predetermined distance and act as a support for the wheels to be washed, which are in a standing position, to rotate as they are being washed and, if applicable, dried.

Smaller idle rollers are also fixed via respective supports to the inner walls of the washing chamber, and have the purpose of maintaining the wheel in a standing position as it rotates during the washing and, if applicable, the drying process, and prevent it from swinging or hitting the inner sidewalls of the casing.

Also, the washing chamber contains washing nozzles and possibly also drying nozzles, which are mounted on both sides of the wheels to be washed and are fixed to the inner walls of the casing.

These nozzles are in mutually faced relationship, with each wheel to be washed and dried being designed to be placed therebetween and rotated by the motor-driven roller.

Each of the washing nozzles typically consists of a cylindrical tube segment whose bottom end is open and has a connection for an end of a washing fluid carrying pipe, and which is connected to a pump, also fixed to the wheel washing machine, external to the washing chamber.

The opposite top end of the cylindrical tube segment is closed by a diaphragm having a hole formed therein which opens into a deflector, typically curved, whose base is substantially tangent to the hole and is bowed toward the central area of the washing chamber in which each wheel is placed, such that the washing fluid jets emitted from the hole of the upper end are deflected at right angles to the longitudinal axis of the tube segment.

The curved deflector has the additional purpose of spreading out the washing fluid jets into a fan shape such that they may substantially extend around a plane tangent to a free end of the deflector.

The washing nozzles are secured to their respective inner walls of the washing chamber by means of a connection flange and are fastened thereto, for instance, by means of screw elements.

Each nozzle is typically connected to its wall of the washing chamber, with the tube segment arranged vertically, and parallel to the wall, and the deflector oriented such that the plane around which the nozzle jet extends has a horizontal extension, substantially parallel to the longitudinal axes of the first and second transverse wheel-supporting rollers.

If desired, second drying nozzles are also typically connected to these nozzles.

An optimal cleaning effect is obtained when the nozzle jets impinge upon the surface of the wheel to be washed in a direction that is as transverse as possible and not parallel thereto, for maximized mechanical dirt removal due to the impact of the washing liquid jets onto the wheel surface.

Furthermore, as much as possible of the washing liquid jets should advantageously hit the entire surface of the wheel, irrespective of its diameter and width, for proportional reduction of the washing times required for thorough cleaning wheels of smaller diameters and sizes, which would not be possible if the nozzle jets failed to fully hit the wheel.

Typically, a wheel rim of a vehicle, e.g. a car, has, especially in wheels with light alloy rims, a plurality of spokes connecting the central hub to the outer shell upon which the tire is mounted.

Each of these spokes has an outer face, relative to the vehicle, which is substantially perpendicular to the axis of rotation of the wheel and is delimited by two lateral faces, which are conversely substantially parallel to the above mentioned axis of rotation.

From patent EP2527215 a "Spraying device for a wheel washing machine is known.

The spraying device has supplying means for supplying washing liquids, a longitudinal axis, ejector means for ejecting said washing liquid in the form of substantially flat jects, transversally facing the wheel to be washed.

The ejector means comprise an ejecting groove which is diagonally oriented with respect to said longitudinal axis of said supplying means with a jet dividing and deflecting apparatus mounted in front of it, for dividing and deflecting said jets into at least two jets defining respective spraying areas.

This characteristic of the prior art suffers from a drawback in that the washing liquid jets that reach between the spikes have a direction substantially parallel to the axis of the wheel, and hence hit the lateral faces of the rim spokes in a tangential direction, thereby having a reduced and inadequate washing effect.

This is because the jets that tangentially impinge upon the lateral faces of the spikes cannot impart enough force to remove tough dirt from the rim, and particularly the spikes.

A second drawback is that, with rims having large diameters, such as diameters ranging from 19 to 24 inches, the impact direction of the washing liquid jets relative to the surface of the wheel to be washed changes, i.e. is closer to the perpendicular direction in the central areas of the rim, and is increasingly deflected toward the tangential direction in its peripheral areas.

### Disclosure of the invention

The object of the invention is to improve the prior art.

Another object of the invention is to provide a spraying device for a wheel washing machine, particularly for washing vehicle wheels, that affords a full, satisfactory washing effect, even on wheels whose rims have spokes with surfaces oriented parallel or substantially parallel to the central axis of rotation of the wheels.

A further object of the invention is to reduce the times, and hence the costs of the washing cycles in wheel washing machines.

In one aspect the invention relates to a spraying device for wheel washing machines as defined in the features of claim 1.

The invention achieves the following advantages:
- any kind of wheels, even wheels whose rims have spikes with highly inclined surfaces, or surfaces substantially parallel to their axis of rotation, which might turn out to be hidden and hard-to-reach areas for the washing liquid, can be sprayed and thoroughly washed;
- washing cycles are optimized and, due to improved and better targeted spraying, afford considerable washing liquid savings, typically water.

### Brief Description of the Drawing

Further characteristics and advantages of the invention will be more apparent from the detailed description of a preferred, non-exclusive embodiment of a spraying device for wheel washing machines, which is shown as non-limiting example in the annexed drawings, in which:
FIG. 1 is a general view of a wheel washing machine having a spraying device of the invention;
FIG. 2 is an enlarged perspective view of a first embodiment of the spraying device of the invention;
FIG. 3 is a cross-sectional view of the spraying device of Figure 2 , as taken along a plane III-III;
FIG. 4 is a schematic broken-away view of the spraying device of Figure 2, showing its operation;
FIG. 5 is an perspective view of a second embodiment of the spraying device of the invention;
FIG. 6 is a cross-sectional view of the spraying device of Figure 5 , as taken along a plane VI-VI;
FIG. 7 is a cross-sectional view of the spraying device of the invention according to a third possible embodiment;
FIG. 8 is a cross-sectional view of the spraying device of the invention according to a fourth possible embodiment;
FIG. 9 is a perspective view of a fifth spraying device;
FIG. 10 is a cross-sectional view of the spraying device of Figure 9 , as taken along a plane X-X;
FIG. 11 is a perspective view of a sixth spraying device;
FIG. 12 is a cross-sectional view of the spraying device of Figure 11, as taken along a plane XII-XII.

### Detailed description of a preferred embodiment

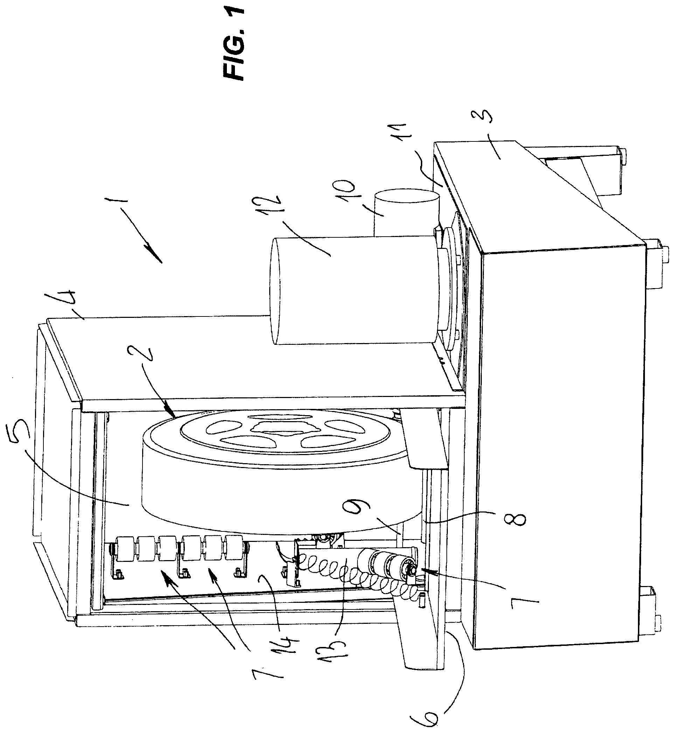

Referring to Figure 1, numeral 1 generally designates a wheel washing machine for washing vehicle wheels 2.

The machine 1 comprises a base frame 3 having the shape of a box-like container, with an upper frame 4 mounted thereabove to form therein a washing chamber 5 in which the wheels 2 to be washed may be introduced, in a standing position, as shown in Figure 1 .

The upper frame 4 has a front wall 6 which is actually a pivotal door, adapted to be pivoted between a position in which it closes the chamber 5 and a position in which it opens it (see Figure 1 again) for the wheels 2 to be introduced therein or removed therefrom, and to be washed with no washing splash being ejected out of the chamber 5.

In such chamber series of idle rollers 7 are mounted to the lateral inner walls, for holding the wheels 2 in their standing position during the washing treatment.

The wheels 2 are supported in the chamber 5 from below by a pair of parallel transverse rollers 8 and 9, one of which is rotatably motorized to impart rotary motion to the wheels 2 during the washing treatment.

The motorized roller is rotatably driven by a motor unit 10 which is placed on a support surface 11 provided over the base frame 3, which also supports a pumping unit 12 that draws a washing liquid from within the base frame 3 and pumps it toward a series of sprayers 13.

The latter are mounted in the chamber 5 and are fixed to the inner vertical walls 14 thereof to spray the liquid onto the wheels 2 during the washing treatment.

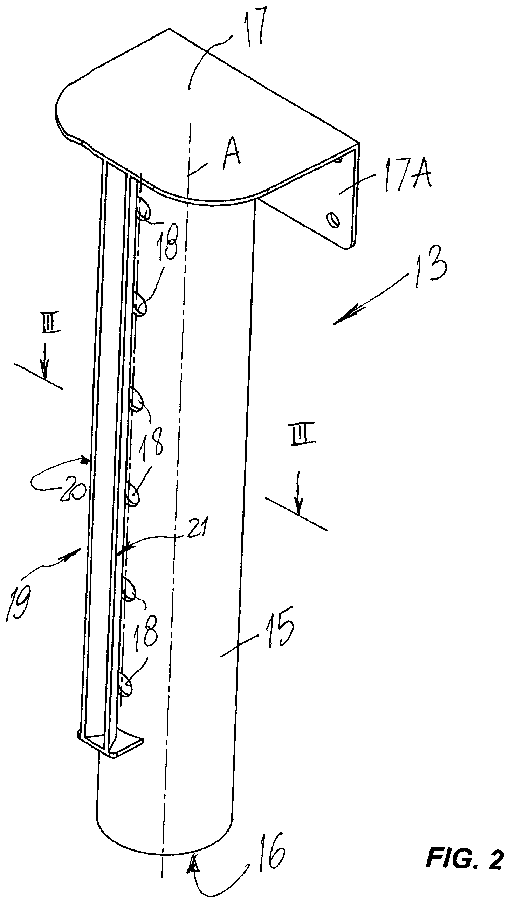

Referring now to figure 2, a first embodiment of a sprayer 13 of the invention is shown, comprising a cylindrical body 15 that defines a longitudinal axis "A" and has a bottom end 16 with an inlet (not shown) for the washing liquid pumped by the pumping unit 12 and an opposite top end closed by a flange 17 which has a folded portion 17A for fastening the spraying deice 13 to one of the walls 14.

As shown in figure 2, the cylindrical body 15 has a plurality of spray holes 18 arranged along a longitudinal line parallel to the longitudinal axis "A".

A deflector element 19 is longitudinally secured in front of these holes 18, and has at least two deflecting surfaces 20 and 21, actually two half-surfaces, which are designed to deflect flows "F" of sprayed liquids and form together a dihedral having a common vertex 22 for the two surfaces 20 and 21.

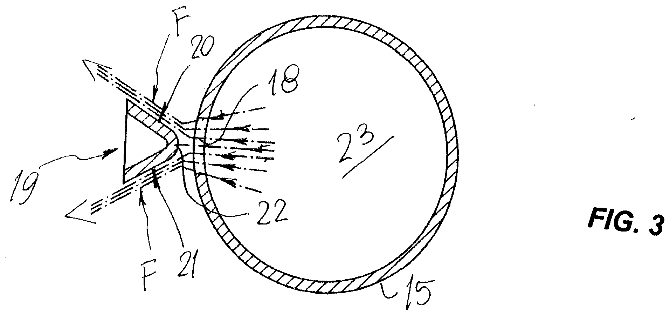

As shown in figure 3, the angle formed by the two surfaces 20 and 21 is an obtuse angle and the surfaces 20 and 21 deflect the flows "F" toward the wheels 2 to be washed in diverging directions.

The inner chamber 23 of the cylindrical body 15, in this embodiment, is completely free.

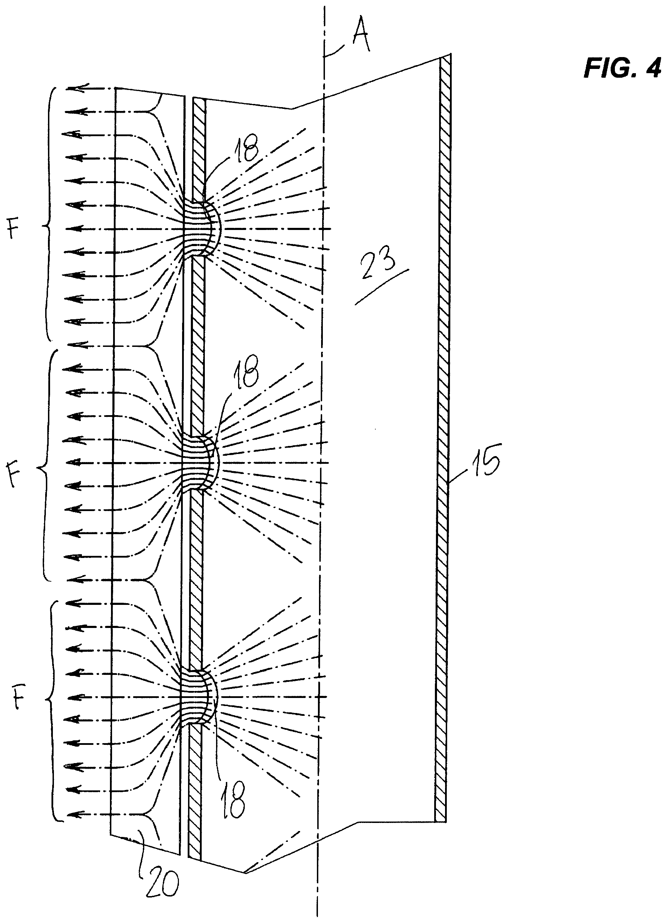

Referring now to figure 4, there is shown the schematic pattern of the washing liquid flows "F" sprayed through the holes 18 and deflected by one of the deflecting surfaces, here the surface 20.

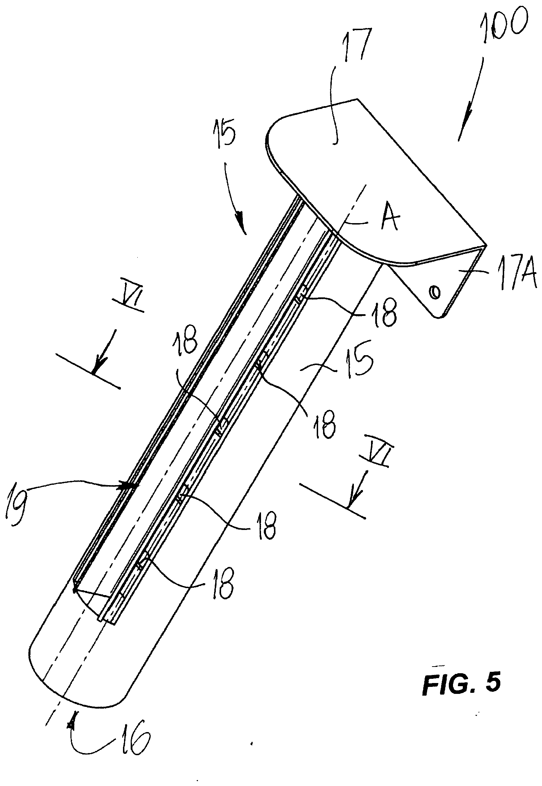

Referring to figure 5, a second embodiment of the spraying device of the invention is shown, in which equal elements have been designated by equal reference numerals.

In this second embodiment, the spraying device has been generally designated by numeral 100 and also has a cylindrical body 15 with the bottom end 16 having an inlet for the washing liquid and the opposite top end closed by the flange 17 that forms the folded portion 17A for fixation to an inner wall 14 of the washing chamber 5.

Unlike the first embodiment, in this second embodiment a portion 115 of the outer wall that forms the cylindrical body 15 is folded toward the inner chamber 23 and forms a recess that creates a second dihedral with surfaces 120 and 121 parallel to the surfaces 20 and 21 of the deflector element 19 which, in this case, is fixed to the cylindrical body 15 without projecting out of it, but by occupying an area of the inner chamber 23, thereby still forming the common vertex 22 for both surfaces 20 and 21.

In the area of the portion 115 of the body 15 in front of the common vertex 22 holes 118 are formed, through which the flows washing liquid "F" are sprayed.

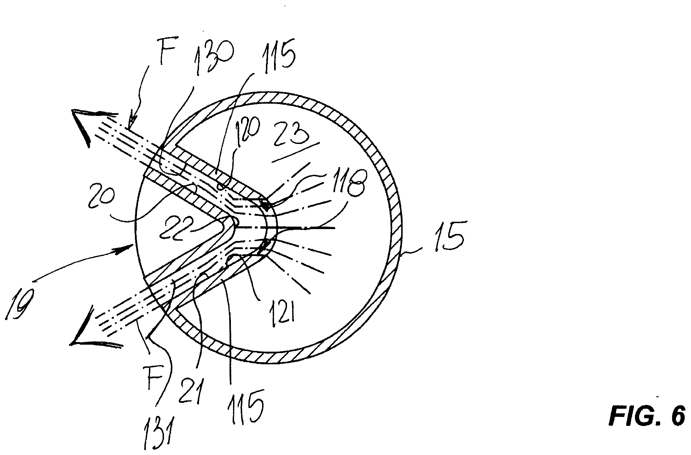

As shown in figure 6, two passages 130 and 131 are defined between the surfaces 20 and 21 and the facing and respectively parallel surfaces 120 and 121, which form respectively divergent laminar flow channels for the flows "F" directed in two diverging directions, like in the above described first embodiment of the spraying device.

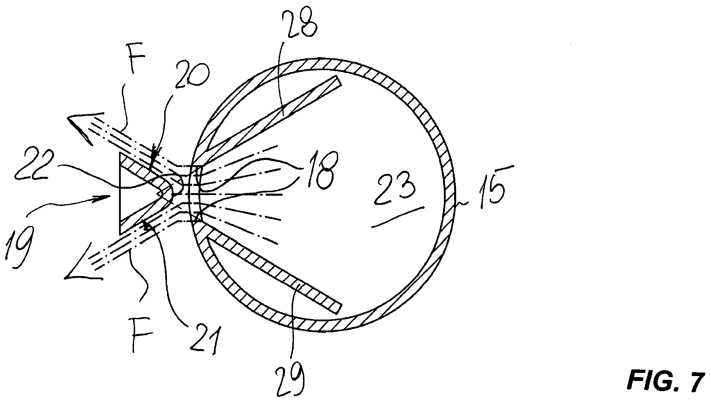

Referring to figure 7, a third embodiment of the spraying device of the invention is shown, which is substantially similar to the first embodiment and only differs therefrom in the presence of two conveying walls 28 and 29 which extend from the surface of the cylindrical body 15 toward the interior 23 of the latter.

These two walls 28 and 29 have the purpose of improving the flow of washing liquid into the inner chamber 23 through the inlet of the bottom end 16 toward the spray holes 18.

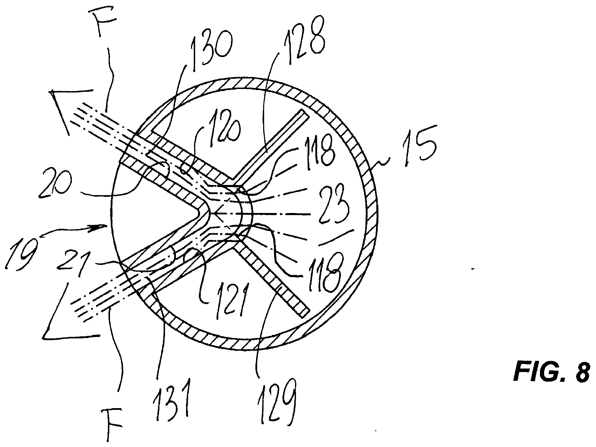

Likewise, referring to figure 8, which shows a fourth embodiment of the spraying device of the invention, such embodiment is substantially similar to the second embodiment as shown in Figure 6 , except that, here again, two conveying walls 128 and 129 are provided, which extend inwards 23 and are designed to promote the washing liquid flows "F" into the inner chamber 23 through the inlet of the bottom end 16 toward the spray holes 118.

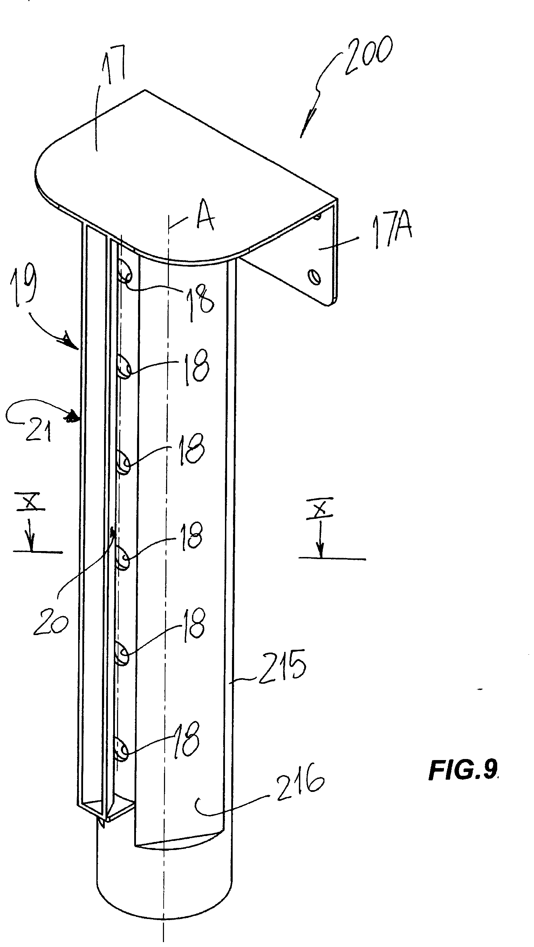

Referring now to figure 9, a fifth spraying device is shown.

In this fifth layout, the spraying device is referenced 200 and has a generally cylindrical body 215 in which spray holes 18 are still formed, and arranged along a line parallel to the longitudinal axis "A".

Like in the first embodiment, in this fifth embodiment the deflector element 19 is also mounted in front of the holes 18, and has the two reflecting surfaces 20 and 21 divergently oriented.

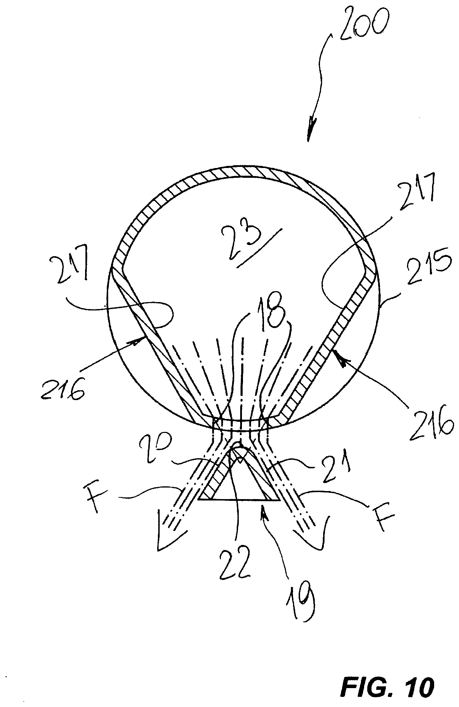

The body 215, as also shown in figure 10 , has a substantially cylindrical shape, but features two longitudinal sections 216 which form two respective walls recessed into the inner chamber 23, and which form, by their respective inner surfaces 217, walls for conveying the washing liquid flows "F" toward the spray holes 18.

That deflector element 19 is the same as that of the first embodiment of the spraying device of the invention, and it will not be described any further.

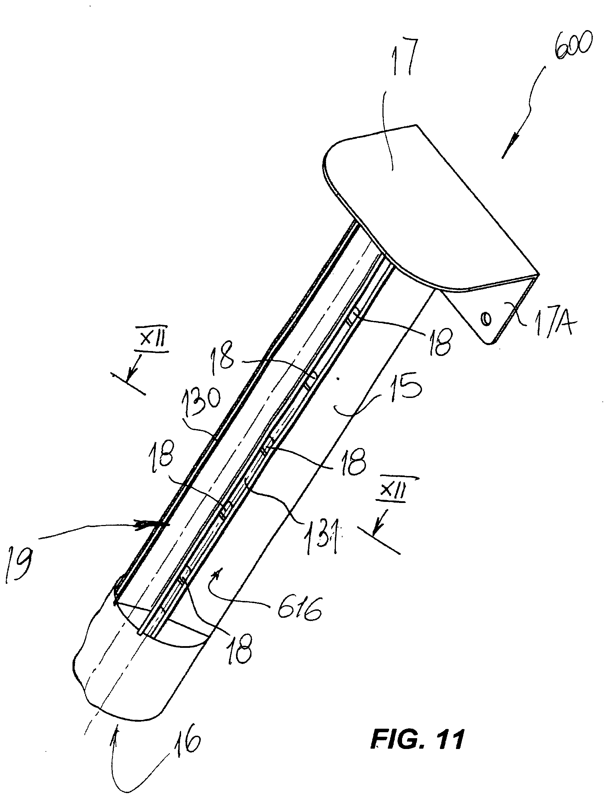

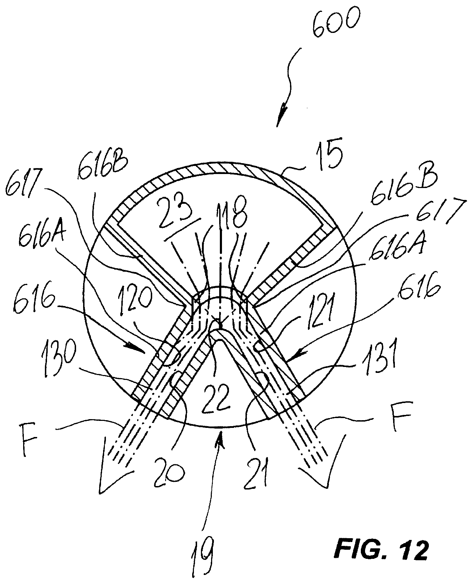

Referring now to figures 11 and 12, a sixth spraying device is shown.

This spraying device is substantially similar to the second embodiment of shown in figures 5 and 6, except that the body 15 has, like in the above-described fifth embodiment, two inwardly recessed longitudinal walls 23, generally referenced 616.

Both walls 616 are corner-shaped with respective portions 616A and 616B joined at common edges 617.

More in detail, as shown in figure 12, the portions 616A form, with the two deflecting surfaces 20 and 21, the two passages 130 and 131 from which the flows "F" are ejected outwards in diverging directions.

The two portions 616B of the walls 616 form two conveying walls that convey the flows "F" of washing fluid that comes from the inlet (not shown) formed in the bottom end 16 of the body 15, toward the spray holes 18.

The operation of the spraying device is as follows: generally, in all of its embodiments, washing liquid flows "F" may be generated, which are directed both horizontally in at least two divergent directions, and in a fan arrangement also in the vertical direction, for optimized spraying and washing of the wheel 2 within the chamber 5 of the wheel washing machine 1.

More in detail, in the first embodiment of the spraying device, the flows "F" of washing liquid, typically water added with a detergent, are forced by the pumping unit 12 into the inner chamber 23 of the body 15, from which they are ejected through the spray holes 18.

The flows "F" sprayed from the holes 18 impinge upon the two deflecting surfaces 20 and 21 of the deflector element 19, which are placed in front of them, and are deflected thereby both horizontally and vertically in diverging directions.

In practice, two volumes of spray flows "F" are generated, which cover the entire wheel 2 within the washing chamber 5 of the wheel washing machine 1, by hitting the surfaces of the wheel 2 in orthogonal, oblique and tangential directions.

By this arrangement, the washing liquid flows "F" may also reach hidden surfaces of the wheels 2, i.e. oriented in tangential or oblique directions relative to the two main surfaces formed by the wheel sidewalls.

The same result is achieved using the second embodiment of the spraying device of the invention.

In this case, the washing liquid flows "F" still enter the inner chamber 23 through the inlet formed at the bottom end 16 of the body 15 and from there 23 penetrate the holes 18 and are conveyed along the two passages 130 and 131 after being deflected by the deflecting surfaces 20 and 21 of the deflector element 19 which, in this case, is entirely contained within the transverse dimensions of the body 15.

The same applies to the third and fourth embodiments, in which the flows "F" that enter the inner chamber 23 through the bottom end 16 of the body 15 are conveyed toward the spray holes 18 by the conveying walls 28 and 29, for the third embodiment, and 128 and 129 for the fourth embodiment.

In the fifth spraying device 200, the longitudinal sections 216, which retract into the inner chamber 23 relative to the body 215, shape the inner surfaces 217 that convey the washing liquid flows "F" from the interior 23 toward the spray holes 18 and from the latter against the deflecting surfaces 20 and 21 of the deflector element 19.

In the sixth spraying device, once the washing liquid flows "F" have entered the inner chamber 23 through the inlet (not shown) formed in the bottom end 16 of the body 15, they are conveyed toward the spray holes 18 by the two portions 616B of the two walls 616 and are later deflected by the deflecting walls 20 and 21 along the passages 130 and 131 and from the latter toward the wheel 2 to be washed which, like in the above described cases, is thoroughly sprayed, for a full and satisfactory washing effect.

The invention has been found to fulfill the intended objects.

The invention so conceived is susceptible to changes and variants within the scope of the appended claims.

Also, all the details may be replaced by other technical equivalent elements.

In its practical implementation, any material and size may be used.

as needed, without departure from the scope as defined by the following claims.

## Claims

1. A spraying device (13; 100; 200; 600) for wheels washing machines (1) comprising:
- a three-dimensional body (15; 215) which is cylindrical and defines a longitudinal axis (A) and an inner longitudinal chamber (23) through which flows of a washing liquid fed by feeding means (12) flow;
- spraying means (18; 118) of said flows from said inner chamber (23) toward the outside, obtained in said three-dimensional body (15; 215);
- deflecting means of sprayed flows from said inner chamber (23) toward the outside in the direction of a wheel (2) to be washed, said deflecting means including at least one deflecting element (19), which has at least two deflecting surfaces (20, 21) according to at least two directions and which is supported by said three-dimensional body (15; 215) in a longitudinal position, wherein said deflecting surfaces (20, 21) face said spraying means (18; 118),
**characterized in that** the three-dimensional body (15; 215) has as spraying means a plurality of spray holes (18) arranged along a longitudinal line parallel to the longitudinal axis (A),
wherein the deflector element (19) is longitudinally secured in front of the plurality of holes (18), and
wherein the at least two deflecting surfaces (20, 21) are designed to deflect a flows (F) of the washing liquid and form together a dihedral having a common vertex (22) for the two deflecting surfaces (20, 21).

2. A device as claimed in claim 1, wherein said deflecting surfaces (20, 21) are reciprocally diverging and comprise at least two semi-planes joined together to form one dihedron having a common origin vertex (22) fronting said spraying means (18; 118).

3. A device as claimed in claim 1 or 2, wherein said inner chamber (23) comprises inner channeling means (28, 29 115; 128, 129; 216; 616) which converge toward said spraying means (18; 118).

4. A device as claimed in claim 3, wherein said channeling means comprise respective channeling walls (28, 29; 120, 121; 128, 129; 217; 616B) prolonging from said spraying means (18; 118) to the inside of said inner chamber (23).

5. A device as claimed in anyone of preceding claims, wherein said deflecting element (19) is supported on the outside of said three-dimensional body (15; 215).

6. A device as claimed in anyone of preceding claims, wherein said deflecting element (19) is supported toward the inside of said inner chamber (23).

7. A device as claimed in anyone of preceding claims, wherein said three-dimensional body (815; 115) comprises a cylindrical body having one inner end (16) of said flows and one opposing closed end by closing means (17).

8. A device as claimed in claim 1, wherein said three-dimensional body comprises fastening means (17A) in a washing chamber (5) of a wheel washing machine (1).

9. A device as claimed in anyone of preceding claims, wherein said plurality of holes (18; 118) are arranged in a row which is parallel to and faced to an origin vertex (22).

10. A device as claimed in anyone of preceding claims, comprising a pair of parallel transverse rollers (8, 9), one of which is rotatably motorized to impart rotary motion to the wheels (2) during the washing treatment, so that the wheels (2) are operatively supported in a chamber (5) from below by the pair of rollers (8, 9).

11. A device as claimed in anyone of preceding claims, wherein the deflector element (19) is longitudinally secured in front of the holes (18).

12. A device as claimed in claim 11, wherein the at least two deflecting surfaces (20, 21), are designed to deflect flows (F) of sprayed liquids and form together a dihedral having a common vertex (22) for the two surfaces (20, 21).

13. A device as claimed in claim 12, wherein an angle formed by the two surfaces (20, 21) is an obtuse angle and the surfaces (20, 21) deflect the flows (F) toward the wheels (2) to be washed in diverging directions.

14. A device as claimed in claim 12 or 13, wherein said plurality of holes (18; 118) are arranged in a row which is parallel to and faced to the origin vertex (22).

15. A device as claimed in anyone of preceding claims, wherein the inner chamber (23) of the three-dimensional body (15; 215) is completely free.

## Patentansprüche

1. Sprühvorrichtung (13; 100; 200; 600) für Radwaschmaschinen (1), umfassend:
- ein dreidimensionales Gehäuse (15; 215), das zylindrisch ist und eine Längsachse (A) und eine innere Längskammer (23) definiert, durch die eine von einem Strom von Zuführungsmitteln (12) zugeführte Waschflüssigkeit strömt;
- Sprühmittel (18; 118) dieser Ströme von der inneren Kammer (23) zur Außenseite, ausgebildet im dreidimensionalen Gehäuse (15; 215);
- Ablenkmittel von gesprühten Strömen von der inneren Kammer (23) zur Außenseite in Richtung eines zu waschenden Rads (2), wobei die Ablenkmittel mindestens ein Ablenkelement (19) umfassen, das mindestens zwei Ablenkoberflächen (20, 21) gemäß mindestens zwei Richtungen aufweist, das vom dreidimensionalen Gehäuse (15; 215) in einer Längsposition getragen wird, wobei die Ablenkoberflächen (20, 21) den Sprühmitteln (18; 118) zugewandt sind,
**dadurch gekennzeichnet, dass** das dreidimensionale Gehäuse (15; 215) Sprühmittel mit einer Vielzahl von Sprühlöchern (18) aufweist, die entlang einer Längslinie angeordnet sind, die parallel zur Längsachse (A) verläuft,
wobei das Ablenkelement (19) längsseitig gegenüber der Vielzahl von Löchern (18) gesichert ist und
wobei die mindestens zwei Ablenkoberflächen (20, 21) ausgestaltet sind, um Ströme (F) von Waschflüssigkeit abzulenken und zusammen ein Dieder mit einem gemeinsamen Scheitel (22) für die zwei Ablenkoberflächen (20, 21) zu formen.

2. Vorrichtung nach Anspruch 1, wobei die Ablenkoberflächen (20, 21) gegenseitig auseinanderlaufen und mindestens zwei Halbebenen umfassen, die zusammengefügt sind, um ein Dieder zu formen, aufweisend einen gemeinsamen Ursprungsscheitel (22), der den Sprühmitteln (18; 118) gegenüberliegend angeordnet ist.

3. Vorrichtung nach Anspruch 1 oder 2, wobei die innere Kammer (23) innere Kanalmittel (28, 29, 115; 128, 129; 216; 616) umfasst, die hinführend zu den Sprühmitteln (18; 118) zusammenlaufen.

4. Vorrichtung nach Anspruch 3, wobei die inneren Kanalmittel jeweilige Kanalwände (28, 29; 120, 121; 128, 129; 217; 616B) umfassen, die sich von den Sprühmitteln (18; 118) zur Innenseite der inneren Kammer (23) erstrecken.

5. Vorrichtung nach einem der vorhergehenden Ansprüche, wobei das Ablenkelement (19) an der Außenseite des dreidimensionalen Gehäuses (15; 215) getragen wird.

6. Vorrichtung nach einem der vorhergehenden Ansprüche, wobei das Ablenkelement (19) hinführend zur Innenseite der inneren Kammer (23) getragen wird.

7. Vorrichtung nach einem der vorhergehenden Ansprüche, wobei das dreidimensionale Gehäuse (815; 115) ein zylindrisches Gehäuse umfasst, aufweisend ein inneres Ende (16) der Ströme und ein entgegengesetztes geschlossenes Ende durch Verschließmittel (17).

8. Vorrichtung nach Anspruch 1, wobei das dreidimensionale Gehäuse Befestigungsmittel (17A) in einer Waschkammer (5) einer Radwaschmaschine (1) umfasst.

9. Vorrichtung nach einem der vorhergehenden Ansprüche, wobei die Vielzahl von Löchern (18; 118) in einer Reihe angeordnet ist, die parallel zu einem Ursprungsscheitel (22) angeordnet und diesem zugewandt ist.

10. Vorrichtung nach einem der vorhergehenden Ansprüche, umfassend ein Paar paralleler Querwalzen (8, 9), von denen eine drehbar motorisiert ist, um den Rädern (2) während der Waschbehandlung eine Drehbewegung zu verleihen, sodass die Räder (2) betriebswirksam in einer Kammer (5) von unten durch das Paar von Walzen (8, 9) getragen werden.

11. Vorrichtung nach einem der vorhergehenden Ansprüche, wobei das Ablenkelement (19) längsseitig gegenüber den Löchern (18) gesichert ist.

12. Vorrichtung nach Anspruch 11, wobei die mindestens zwei Ablenkoberflächen (20, 21) ausgestaltet sind, um Ströme (F) gesprühter Flüssigkeiten abzulenken und zusammen ein Dieder mit einem gemeinsamen Scheitel (22) für die beiden Oberflächen (20, 21) zu bilden.

13. Vorrichtung nach Anspruch 12, wobei ein Winkel, der von den zwei Oberflächen (20, 21) geformt ist, ein stumpfer Winkel ist und die Oberflächen (20, 21) die Ströme (F) zu den zu waschenden Rädern (2) in auseinanderlaufende Richtungen ablenken.

14. Vorrichtung nach Anspruch 12 oder 13, wobei die Vielzahl von Löchern (18; 118) in einer Reihe angeordnet ist, die parallel zum Ursprungsscheitel (22) angeordnet und diesem zugewandt ist.

15. Vorrichtung nach einem der vorhergehenden Ansprüche, wobei die innere Kammer (23) des dreidimensionalen Gehäuses (15; 215) völlig frei ist.

## Revendications

1. Dispositif de pulvérisation (13 ; 100 ; 200 ; 600) pour machines à laver des roues (1) comprenant :
- un corps tridimensionnel (15 ; 215) étant cylindrique et définissant un axe longitudinal (A) et une chambre longitudinale (23) intérieure à travers laquelle s'écoulent des flux de liquide de lavage alimenté par des moyens d'alimentation (12) ;
- des moyens de pulvérisation (18 ; 118) desdits flux à partir de ladite chambre intérieure (23) vers l'extérieur, obtenus dans ledit corps tridimensionnel (15 ; 215) ;
- des moyens de déviation des flux pulvérisés à partir de ladite chambre intérieure (23) vers l'extérieur dans la direction d'une roue (2) à laver, lesdits moyens de déviation incluant au moins un élément de déviation (19) comportant au moins deux surfaces de déviation (20, 21) selon au moins deux directions et étant supporté par ledit corps tridimensionnel (15 ; 215) dans une position longitudinale, dans lequel lesdites surfaces de déviation (20, 21) font face auxdits moyens de pulvérisation (18 ; 118),
**caractérisé en ce que** le corps tridimensionnel (15 ; 215) comporte comme moyens de pulvérisation une pluralité de trous de pulvérisation (18) disposés le long d'une ligne longitudinale parallèle à l'axe longitudinal (A),
dans lequel l'élément de déviation (19) est fixé longitudinalement devant la pluralité de trous (18), et dans lequel les au moins deux surfaces de déviation (20, 21) sont conçues pour dévier des flux (F) de liquide de lavage et pour former ensemble un dièdre comportant un sommet commun (22) aux deux surfaces de déviation (20, 21) .

2. Dispositif selon la revendication 1, dans lequel lesdites surfaces de déviation (20, 21) sont réciproquement divergentes et comprennent au moins deux demi-plans joints ensemble pour former un dièdre comportant un sommet d'origine (22) commun faisant face auxdits moyens de pulvérisation (18 ; 118).

3. Dispositif selon la revendication 1 ou 2, dans lequel ladite chambre intérieure (23) comprend des moyens de canalisation (28, 29, 115 ; 128, 129 ; 216 ; 616) intérieurs convergeant vers lesdits moyens de pulvérisation (18 ; 118).

4. Dispositif selon la revendication 3, dans lequel lesdits moyens de canalisation comprennent des parois de canalisation (28, 29 ; 120, 121 ; 128, 129 ; 217 ; 616B) respectives se prolongeant à partir desdits moyens de pulvérisation (18 ; 118) vers l'intérieur de ladite chambre intérieure (23).

5. Dispositif selon l'une quelconque des revendications précédentes, dans lequel ledit élément de déviation (19) est supporté sur l'extérieur dudit corps tridimensionnel (15 ; 215).

6. Dispositif selon l'une quelconque des revendications précédentes, dans lequel ledit élément de déviation (19) est supporté vers l'intérieur de ladite chambre intérieure (23).

7. Dispositif selon l'une quelconque des revendications précédentes, dans lequel ledit corps tridimensionnel (815 ; 115) comprend un corps cylindrique comportant une extrémité intérieure (16) desdits flux et une extrémité opposée fermée par des moyens de fermeture (17).

8. Dispositif selon la revendication 1, dans lequel ledit corps tridimensionnel comprend des moyens de fixation (17A) dans une chambre de lavage (5) d'une machine à laver des roues (1).

9. Dispositif selon l'une quelconque des revendications précédentes, dans lequel ladite pluralité de trous (18 ; 118) est disposée en une rangée étant parallèle et faisant face à un sommet d'origine (22).

10. Dispositif selon l'une quelconque des revendications précédentes, comprenant une paire de rouleaux transversaux (8, 9) parallèles, dont l'un est motorisé en rotation pour conférer un mouvement rotatif aux roues (2) pendant le traitement de lavage, de sorte que les roues (2) sont fonctionnellement supportées dans une chambre (5) par le bas par la paire de rouleaux (8, 9).

11. Dispositif selon l'une quelconque des revendications précédentes, dans lequel l'élément de déviation (19) est fixé longitudinalement devant les trous (18).

12. Dispositif selon la revendication 11, dans lequel les au moins deux surfaces de déviation (20, 21) sont conçues pour dévier des flux (F) de liquides pulvérisés et pour former ensemble un dièdre comportant un sommet commun (22) aux deux surfaces (20, 21).

13. Dispositif selon la revendication 12, dans lequel un angle formé par les deux surfaces (20, 21) est un angle obtus et les surfaces (20, 21) dévient les flux (F) vers les roues (2) à laver dans des directions divergentes.

14. Dispositif selon la revendication 12 ou 13, dans lequel ladite pluralité de trous (18 ; 118) est disposée en une rangée étant parallèle et faisant face au sommet d'origine (22).

15. Dispositif selon l'une quelconque des revendications précédentes, dans lequel la chambre intérieure (23) du corps tridimensionnel (15 ; 215) est complètement libre.
